# EUROPEAN PATENT APPLICATION

(11) **EP 3 992 759 A1**
(43) Date of publication of application: **04.05.2022**
(21) Application number: 20465578.1
(22) Date of filing: 30.10.2020
(51) Int. Cl.: G06F 3/01

(54) **GESTURE CONTROL FOR DISPLAYING IMAGES ON AN ELECTRONIC REARVIEW MIRROR**

(71) Applicant: Continental Automotive GmbH, 30165 Hannover (DE); Continental Automotive Romania SRL, 300704 Timisoara (RO)
(72) Inventor: Matei, Dan Alexandru, 300704 Timisoara (RO); Ipatiov, Alexandru, 300704 Timisoara (RO); Tirzioru, Bogdan, 300704 Timisoara (RO); Serghie, Andrei, 300704 Timisoara (RO)
(74) Representative: Schlögl, Michael Jens Uwe

(57) **Abstract**

The invention refers to a method of gesture control for displaying images on a camera-based electronic rearview mirror system in a vehicle. By means of at least one side-mounted camera are acquired image data relating to the vehicle environment and displayed by side-mounted rearview displays. The method operates under the control of one or more processors configured to feed a video stream from the side-mounted cameras and comprises the following steps:
- (**S100**) Continuously monitoring driver information by acquiring images of driver's line of sight and posture through a driver surveillance camera;
- (**S200**) Recognizing a specific gesture or combination of gestures of the driver as a trigger event;
- (**S300**) Performing image synthesis according to a specification associated to the recognized trigger event;
- (**S400**) Processing an image output according to the specification associated to the recognized trigger event;
- (**S500**) Adjustment controlling the electronic rearview mirror according to the recognized trigger event.

## Description

The present invention relates to a method of gesture control for displaying images on an electronic rearview mirror in a vehicle.

More and more exterior side mirrors are replaced by cameras mounted in the similar lateral positions and displays usually mounted at the dashboard extremities, in the A-pillars lower regions. The displays show a fixed camera feed (each from the respective lateral camera) . The display field of view and angle may be adjusted to the driver's preferences through an invehicle interface intended to be used while vehicle is stationary. Also, the field of view and angle may differ when vehicle drives in reverse to assist the maneuver. Nevertheless, with an optical mirror, the field of view may be temporarily adjusted by adjusting the driver's position relative to the mirror. This is not possible with a display that projects a camera image.

In this respect, there are known the so-called "intelligent rearview mirror systems", as the one described by EP3162636 B1, for example, whereby the rearview mirror system is configured to adjust to a user's position without direct user interaction. The mirror is repositioned by means of actuators based on an identified eye information, so that the driver's line of sight is directed halfway between the identified eye information and the center of a rear window. Another example of a smart rearview mirror system is described by US10239455B2. The reactive system comprises a driver head and eyes' position detecting sensor, a rearview camera that captures images of an environment behind the vehicle, and a display screen. An electronic processor is communicatively coupled to each of the driver sensor, the rearview camera, and the display screen. The electronic processor receives images captured by the rearview camera, receives outputs of the driver sensor, determines a position of the driver's head or eyes dependent upon the outputs of the driver sensor, and transmits video signals to the display screen. The video signals are dependent upon the determined position of the driver's head or eyes and dependent upon images captured by the rearview camera.

However, none of the mentioned inventions implies a conscient input from the driver, in order to control the displaying of additional information.

Therefore, the technical problem is to allow the driver to control the images displayed of the rearview mirror by means of gestures.

The objective of invention is to solve the deficiencies of the mentioned prior art and to enhance the functionality of an electronic rearview mirror by displaying additional information (a different field of view, and/or a different angle) at the driver's request controlled through a gesture interface.

This objective is achieved according to the invention by means of the technical characteristics mentioned in the independent claim, namely a method of gesture control for displaying images on an electronic rearview mirror in a vehicle.

Further advantageous embodiments are the subject matter of the dependent claims.

The subject-matter of the present invention is a gesture control for displaying images on an electronic rearview mirror, said method comprising the following steps:
- Continuously monitoring driver information by acquiring images of driver's line of sight and posture through a driver surveillance camera;
- Recognizing a specific gesture or combination of gestures of the driver as a trigger event;
- Performing image synthesis according to a specification associated to the recognized trigger event;
- Processing an image output according to the specification associated to the recognized trigger event;
- Adjustment controlling the electronic rearview mirror according to the recognized trigger event.

The main advantages of the invention are an increased situational awareness of the driver through an intuitive, natural interface, as well as an increased driver comfort in difficult traffic conditions.

Further special features and advantages of the present invention can be taken from the following description of advantageous embodiments by way of the accompanying drawings.
Fig. 1 presents a default state of a system of gesture control operating according to invention;
Fig. 2 shows the processing chain of the method of gesture control for displaying images on an electronic rearview mirror, according to invention;
Fig. 3 illustrates a triggered state of the system of gesture control;
Fig. 4 presents the case of a driver-centered display with a default field-of-view;
Fig. 5 shows the case of a driver-centered display, when the driver leans to the left and the display follows this gesture by extending the left field-of-view.

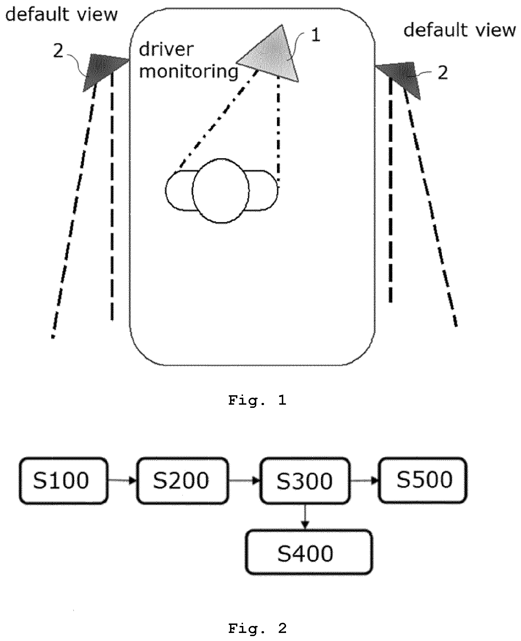

Referring now to Fig. 1, there is illustrated a vehicular electronic rearview mirror operated according to invention, in an embodiment adapted for a vehicle equipped with a camerabased electronic rearview mirror system, implemented with dedicated cameras or with shared cameras, providing a field of view backward oriented. In the following description, the side-mounted displays can also be referred to as mirrors, since they serve the same functional purpose from the driver's point of view. At the same time, this invention applies to a vehicle equipped with a driver monitoring camera, for example a visible light or an infrared camera system, or any similar internal surveillance camera aimed at the driver and capable of monitoring the driver's line of sight and posture. The electronic rearview mirror operates under the control of one or more processors configured with executable instructions implemented as code (e.g., executable instructions, one or more computer programs or one or more applications). The code is stored on a computer-readable storage medium, for example, in the form of a computer program including a plurality of instructions executable by processor(s). The computer-readable storage medium may be non-transitory.

Alternately, a single wide, driver-centered display 1 may be used instead of two side-mounted displays showing the field of view from two side-mounted cameras 2 (or an equivalent synthetic image). The single driver-centered display 1 replaces also the classic center mirror and displays a field of view equivalent to that of all three mirrors combined (side mirrors and center mirror). The processor (s) (not illustrated nor referenced) feeds a video stream from the side-mounted cameras 2 and adjusts the video stream according to one of several strategies when a multitude of trigger events (i.e. specific gestures) are detected.

Fig. 2 shows the processing chain of a method of gesture control for displaying images on an electronic rearview mirror in a vehicle, according to invention. The method of gesture control comprises the following steps:
- **S100:** Continuously monitoring driver information by acquiring images of driver's line of sight and posture through a driver surveillance camera;
- **S200:** Recognizing a specific gesture or combination of gestures of the driver as a trigger event;
- **S300:** Performing image synthesis according to a specification associated to the recognized trigger event;
- **S400:** Processing an image output according to the specification associated to the recognized trigger event;
- **S500:** Adjustment controlling the electronic rearview mirror according to the recognized trigger event.

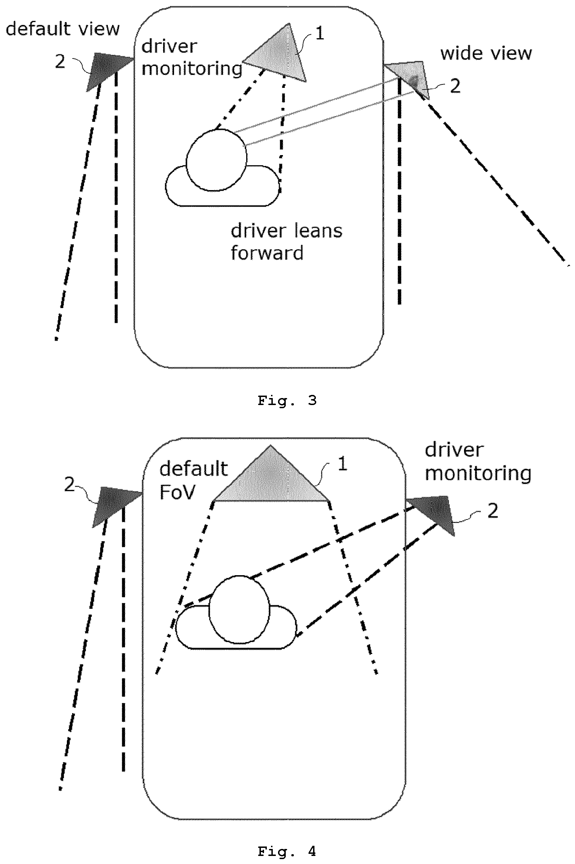

Fig. 3 illustrates a triggered state of the system of gesture control: the driver leans forward and looks towards the right-side display. Once the change of driver's line of sight and posture is recognized, the video feed to the right-side display is adjusted by extending the field-of-view of the displayed image to the right side, on the respective display.

Fig. 4 presents an embodiment of the rearview system comprising a driver-centered display with a default field-of-view.

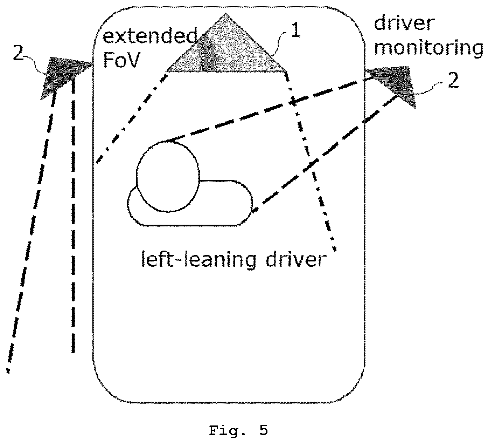

Fig. 5 shows the embodiment from Fig. 4 with a driver-centered display, when the driver leans to the left and the image displayed on the left side of the center-mounted display is adjusted as follows: the field-of-view of the displayed image is extended to the left side.

When driver is looking in the direction of one of the side-mounted rearview displays, the following trigger events are evaluated:
- Driver leans forward;
- Driver leans to the opposite direction of the display he/she is looking at;
- Driver tilts head to the opposite direction of the display he/she is looking at.

When such a trigger event is detected (or a combination of some of them), the video feed to the respective display is adjusted to one or several of the following actions:
- Change camera angle towards outboard;
- Zoom out (display additional field of view from the camera);
- Zoom out a cropped image;
- Split the image into two side-by-side panes, an inboard pane and an outboard pane, with a wider field of view image in the outboard pane;
- Display a synthetic image with a gradually increasing field of view from inboard to outboard.

The concerned display (either driver-centered or side-mounted display) shall return to the normal image with a delay when driver no longer looks in the direction of the respective mirror or display.

The concerned display (either driver-centered or side-mounted display) shall return to the normal image with a delay when driver resumes a normal posture (even though he/she still looks in the direction of the respective display).

However, while certain embodiments of the present invention have been described in detail, those familiar with the art to which this invention relates will recognize various alternative designs and embodiments for practicing the invention as defined by the following claims.

### List of reference numbers

- **1**: Driver surveillance camera
- **2**: Side-mounted camera(s)
- **100**: Driver monitoring
- **200**: Gesture Recognition
- **300**: Image Synthesis
- **400**: Rearview Camera Adjustment Control
- **500**: Image output

## Claims

1. Method of gesture control for displaying images on a camerabased electronic rearview mirror system in a vehicle, whereby image data relating to an environment of the vehicle acquired by at least one side-mounted camera (2) are displayed by side-mounted rearview displays, the method operating under the control of one or more processors configured to feed a video stream from the side-mounted cameras, **characterized in that** the method comprises the following steps:
(**S100**) - Continuously monitoring driver information by acquiring images of driver's line of sight and posture through a driver surveillance camera (1);
(**S200**) - Recognizing a specific gesture or combination of gestures of the driver as a trigger event;
(**S300**) - Performing image synthesis according to a specification associated to the recognized trigger event;
(**S400**) - Processing an image output according to the specification associated to the recognized trigger event;
(**S500**) - Adjustment controlling the electronic rearview display according to the recognized trigger event.

2. Method according to claim 1, **characterized in that** when the driver is looking in the direction of one side-mounted rearview display, the following trigger events are evaluated:
- Driver leans forward;
- Driver leans to the opposite direction of the display he/she is looking at;
- Driver tilts head to the opposite direction of the display he/she is looking at.

3. Method according to preceding claims, **characterized in that** the video feed to a respective driver-centered or side-mounted display is adjusted to one or several of the following actions:
- Change camera angle towards outboard;
- Zoom out, i. e. display additional field of view from camera;
- Zoom out a cropped image;
- Split the image into two side-by-side panes, namely an inboard pane and an outboard pane, with a wider field of view image in the outboard pane;
- Display a synthetic image with a gradually increasing field of view from inboard to outboard.

4. Method according to claims 1-3, **characterized in that** the adjusted display returns to the normal image with a delay when driver no longer looks in the direction of the respective display.

5. Method according to claims 1-3, **characterized in that** the adjusted display returns to the normal image with a delay when driver resumes a normal posture, even though the driver still looks in the direction of the respective display.

## Amended claims

### Amended claims in accordance with Rule 137(2) EPC.

1. Method of gesture control for displaying images on a camera-based electronic rearview mirror system in a vehicle, whereby image data relating to an environment of the vehicle acquired by at least one side-mounted camera (**2**) are displayed by side-mounted rearview displays, the method operating under the control of one or more processors configured to feed a video stream from the side-mounted cameras, wherein the method comprises the following steps:
(**S100**) - Continuously monitoring driver information by acquiring images of driver's line of sight and posture through a driver surveillance camera (**1**);
(**S200**) - Recognizing a specific gesture or combination of gestures of the driver as a trigger event;
(**S300**) - Performing image synthesis according to a specification associated to the recognized trigger event;
(**S400**) - Processing an image output according to the specification associated to the recognized trigger event;
(**S500**) - Adjustment controlling the electronic rearview display according to the recognized trigger event,
**characterized in that** the video feed to a respective driver-centered or side-mounted display is adjusted to one or several of the following actions:
- Change camera angle towards outboard;
- Zoom out, i. e. display additional field of view from camera;
- Zoom out a cropped image;
- Split the image into two side-by-side panes, namely an inboard pane and an outboard pane, with a wider field of view image in the outboard pane;
- Display a synthetic image with a gradually increasing field of view from inboard to outboard.

2. Method according to claim 1, **characterized in that** when the driver is looking in the direction of one side-mounted rearview display, the following trigger events are evaluated:
- Driver leans forward;
- Driver leans to the opposite direction of the display he/she is looking at;
- Driver tilts head to the opposite direction of the display he/she is looking at.

3. Method according to claims 1-2, **characterized in that** the adjusted display returns to the normal image with a delay when driver no longer looks in the direction of the respective display.

4. Method according to claims 1-3, **characterized in that** the adjusted display returns to the normal image with a delay when driver resumes a normal posture, even though the driver still looks in the direction of the respective display.
